Europäisches Patentamt

European Patent Office

Office européen des brevets

(19)

(11) **EP 1 562 060 A1**

(12) **EUROPEAN PATENT APPLICATION**
published in accordance with Art. 158(3) EPC

(43) Date of publication:
**10.08.2005 Bulletin 2005/32**

(51) Int Cl.⁷: **G02B 6/44**, G02B 6/00,
G02B 6/36

(21) Application number: **03792771.2**

(22) Date of filing: **21.08.2003**

(86) International application number:
**PCT/JP2003/010572**

(87) International publication number:
**WO 2004/019103 (04.03.2004 Gazette 2004/10)**

(84) Designated Contracting States:
**AT BE BG CH CY CZ DE DK EE ES FI FR GB GR
HU IE IT LI LU MC NL PT RO SE SI SK TR**

(30) Priority: **22.08.2002 JP 2002241797
22.08.2002 JP 2002241799**

(71) Applicants:
• **Showa Electric Wire and Cable Co.,Ltd.
Kawasaki-shi, Kanagawa 210-0843 (JP)**
• **Nippon Telegraph and Telephone Corporation
Tokyo 100-8116 (JP)**
• **NIPPON ELECTRIC GLASS CO., LTD
Otsu-shi, Shiga 520-8639 (JP)**

(72) Inventors:
• **SHIRAISHI, K.
Showa Electric Wire & Cable Co.,Ltd.
Kawasaki-shi, Kanagawa 210-0843 (JP)**
• **MURASE, T.,
Showa Electric Wire & Cable Co., Ltd.
Kawasaki-shi, Kanagawa 210-0843 (JP)**
• **NAKAMURA, N.
Showa Electric Wire & Cable Co., Ltd.
Kawasaki-shi, Kanagawa 210-0843 (JP)**
• **OHNEDA, S.
Showa Electric Wire & Cable Co., Ltd.
Kawasaki-shi, Kanagawa 210-0843 (JP)**

• **ITOH, M. Showa Electric Wire & Cable Co., Ltd.
Kawasaki-shi, Kanagawa 210-0843 (JP)**
• **TABATA, M.
Showa Electric Wire & Cable Co., Ltd.
Kawasaki-shi, Kanagawa 210-0843 (JP)**
• **NAGASE, R.,
Nippon Telegraph and Telephone Corp.
Chiyoda-ku, Tokyo 100-8116 (JP)**
• **YANAGI, S.,
Nippon Telegraph and TelephoneCorp.
Chiyoda-ku, Tokyo 100-8116 (JP)**
• **IWANO, Shinichi
c/o NTT Advanced Technology Corp.
Shinjuku-ku, Tokyo 163-0431 (JP)**
• **MIYAKE, Taisei
c/o NTT Advanced Technology Corp.
Shinjuku-ku, Tokyo 163-0431 (JP)**
• **TAKEUCHI, Hirokazu
Nippon Electric Glass Co., Ltd.
Otsu-shi, Shiga 520-8639 (JP)**
• **FUNABIKI, Nobuo
c/o Nippon Electric Glass Co., Ltd
Otsu-shi, Shiga 520-8639 (JP)**

(74) Representative: **Glawe. Delfs. Moll
Patentanwälte
Postfach 26 01 62
80058 München (DE)**

(54) **OPTICAL FIBER CORE WIRE, METHOD OF REMOVING COATING FROM OPTICAL FIBER CORE WIRE AND PROCESS FOR PRODUCING OPTICAL FIBER PART**

(57) A resin coated optical fiber 1 comprising a bare optical fiber 2 and sequentially provided on its circumference with a primary coating layer 3a and a secondary coating layer 3b both made of an ultaviolet-curing urethane resin. The primary coating layer 3a and the secondary coating layer 3b have respective thicknesses of 60 to 200 µm and 20 to 300 µm. The pulling force for simultaneously removing the primary and secondary coating layers 3a and 3b is 100 gf or less. The primary coating layer 3a has a tensile strength of 0.5 to 1 MPa.

The primary coating layer 3a after immersed in a solvent has a swelling ratio of 5 to 150 %. The secondary coating layer 3b has a Young's modulus of 100 to 1,500 MPa. This resin coated optical fiber allows its coatings to be removed without deteriorating the strength or other properties of the bare optical fiber and without leaving any coating waste on the surface of the bare optical fiber after the coatings were removed.

EP 1 562 060 A1

# FIG. 1

**Description**

Technical Field

This invention relates to a resin coated optical fiber, a method of removing a coating from a resin coated optical fiber, and a process for producing an optical fiber part. More particularly, the invention relates to a resin coated optical fiber and a method of removing a coating from the resin coated optical fiber, in which the coating of the resin coated optical fiber can be removed without lowering the strength of a bare optical fiber or other properties and in which, after the coating of the resin coated optical fiber was removed, there is no trouble that the waste of a coating resin is left on the surface of the bare optical fiber. In addition, the invention relates to a process for producing an optical fiber part, in which the bare optical fiber cleared of the coating of the resin coated optical fiber is inserted in a thin tube such as a ferrule in an optical function part of a fixed attenuator or the like.

Background Art

Generally, the resin coated optical fiber is provided with a bare optical fiber having a core and a cladding, and a primary coating layer and a secondary coating layer sequentially provided on the outer circumference of the bare optical fiber. In order to inhibit the change in the transmission characteristics of the bare optical fiber due to a temperature change, the primary coating layer is made of a synthetic resin having a Young's modulus of about 1 to 10 MPa at the room temperature, and the secondary coating layer is made of a synthetic resin having a Young's modulus of about 400 to 1,000 MPa at the room temperature. In the case of the single mode (SM) resin coated optical fiber, moreover, the primary coating layer and the secondary coating layer are formed to have external diameters of about 180 to 200 μm and about 230 to 250 μm, respectively, on the outer circumference of the bare optical fiber having an external diameter of 125 μm.

Here, the general purpose resin coated optical fiber is designed to fit the strip force standards (i.e., the strip force of 1.0 N or more and 9.0 N or less at 0 to 45 °C) of Telcordia Standards (GR-20-CORE, Issue 2), and is made to fit the aforementioned standards, although the resin sticks to the surface of the bare optical fiber (or cladding) after the coating was removed, if is wiped clean with a paper wiper wetted with a solvent such as ethanol or isopropyl alcohol (IPA).

The coating of the resin coated optical fiber thus constructed has to be removed in case the bare optical fibers are connected to each other or attached to an optical connector.

As the method of removing the coating of the resin coated optical fiber of this kind, there has been known in the prior art a method of peeling the coating with a stripper or a method of peeling the coating by immersing the resin coated optical fiber in a solvent for a long time.

In this method of removing the coating of the resin coated optical fiber, however, the blade of the stripper may come into contact during the coating removal with the surface of the bare optical fiber (or the cladding), thereby to deteriorate the strength of the bare optical fiber extremely. When the waste of the coating resin left on the surface of the bare optical fiber (or the cladding) after the coating was removed is to be wiped away with the paper wiper wetted with the solvent such as ethanol or isopropyl alcohol (IPA) , the bare optical fiber (or the cladding) may have its surface rubbed with the paper wiper. Therefore, the strength of the bare optical fiber may be extremely lowered, as described above. In case the coating of the resin coated optical fiber is to be removed over a length of 300 mm or more from the terminal, moreover, the bare optical fiber is bent by the force applied to the blade of the stripper. Therefore, the bare optical fiber may be broken before the coating is removed. In the method, by which the terminal of the resin coated optical fiber is heated and/or immersed in the solvent and is pulled by gripping it with a plate-shaped member, moreover, there arises a trouble that the adhesion between the bare optical fiber and the primary coating layer is so strong that the coating cannotbe extracted in a cylindrical shape.

Here will be described the background of a process for producing an optical fiber part.

Generally, the optical function part such as the fixed attenuator is provided with the ferrule as the optical fiber part, and the so-called "bare optical fiber" having removed the coating of the aforementioned resin coated optical fiber is inserted into the through hole of the ferrule.

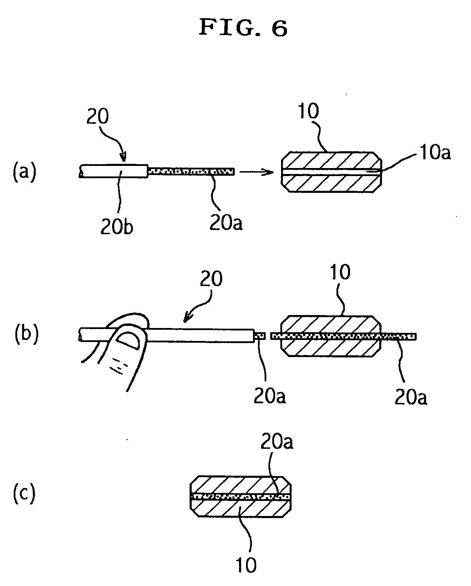

Fig. 6 presents explanatory diagrams of a process for assembling an optical fiber part of the prior art. In Fig. 6(a), a ferrule 10 having a through hole 10a of an internal diameter of 126 μm, for example, is used, and the through hole 10a of the ferrule 10 is filled therein with a (not-shown) adhesive. Next, a resin coated optical fiber 20 has its coating 20b removed over a length of 20 to 40 mm from its leading end portion, thereby to expose a bare optical fiber 20a having an external diameter of 125 μm to the outside. Moreover, the exposed outer surface of the bare optical fiber 20a is cleaned by wiping it with alcohol.

Next, the cleaned bare optical fiber 20a is inserted into the through hole 10a of the ferrule 10, and the adhesive is heated and cured to fix the bare optical fiber 20a in the through hole 10a of the ferrule 10. After this, the bare optical fiber 20a is cut at its protrusions of about 3 to 7 mm from the two ends of the ferrule 10.

Next, the ferrule 10 equipped with the bare optical fiber 20a is polished at its two end faces, as shown in Fig. 6 (c) , so that the optical fiber part can be completed. This optical fiber part is assembled in the housing of the optical function part such as the fixed attenuator so that the optical device is completed.

However, this process for producing the optical fiber part needs the following three steps for producing one optical fiber part: (1) the step of removing the coating of the resin coated optical fiber to expose the bare optical fiber to the outside; (2) the step of cleaning the bare optical fiber exposed; and (3) the step of inserting the cleaned bare optical fiber into the through hole of the ferrule. Thus, this process has a trouble that the working efficiency is poor. Moreover, the bare optical fiber having the protrusions of about 3 to 7 mm from the two ends of the ferrule is cut to raise a trouble that the bare optical fiber is useless.

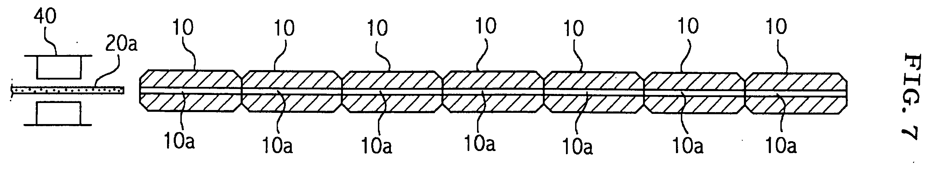

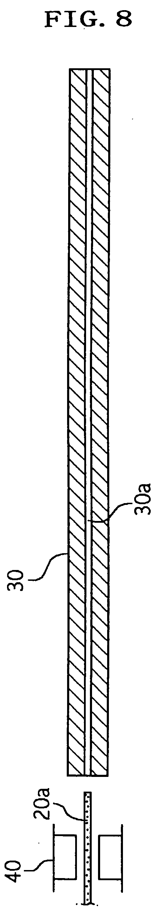

Thus, there has been devised a method, in which a multiplicity of (e.g., seven) ferrules 10 are arranged in series with their through holes 10a being axially aligned so that the bare optical fiber 20a is inserted simultaneously into the through holes 10a of the ferrules 10, as shown in Fig. 7. In another devised method, as shown in Fig. 8, the bare optical fiber 20a is inserted into the through hole 30a of a long ferrule 30, and this ferrule 30 is cut to a predetermined length after the bare optical fiber 20a was inserted.

This method of inserting the bare optical fiber into the ferrule can improve the working efficiency but has the following drawbacks.

At first, the inserting method shown in Fig. 7 or Fig. 8 has to remove the coating 20b of the resin coated optical fiber 20 according to the length of the ferrule 10 or 30 thereby to expose the bare optical fiber 20a to the outside, and to grip the exposed long bare optical fiber 20a with an inserting gripping jig 40. When the long bare optical fiber 20a is to be inserted in this state into the through hole 10a or 30a of the ferrule 10 or 30, moreover, the bare optical fiber 20a may be broken at its portion gripped by the inserting grip jig 40.

Secondly, the waste of the bare optical fiber 20a sticks to the gripped portion of the bare optical fiber 20a and migrates into the through hole 10a or 30a of the ferrule 10 or 30 thereby to cause a drawback that the characteristics of the bare optical fiber 20a are degraded.

Thirdly, when the bare optical fiber 20a is to be inserted into the through hole 10a or 30a of the ferrule 10 or 30, its outer circumference may contact with the inner circumference wall of the through hole 10a or 30a of the ferrule 10 or 30 thereby to cause a drawback that the bare optical fiber 20a is broken. On the other hand, the broken bare optical fiber 20a is junked to raise a drawback that the production yield of the bare optical fiber 20a drops.

Fourthly, the clearance between the through hole 10a or 30a of the ferrule 10 or 30 and the bare optical fiber 20a is hardly left. If the bare optical fiber 20a is to be inserted in this state into the through hole 10a or 30a of the ferrule 10 or 30, there arises a drawback that the insertion of the bare optical fiber 20a is made difficult by the frictional resistance between the outer circumference of the bare optical fiber 20a and the inner circumference wall of the through hole 10a or 30a of the ferrule 10 or 30.

Fifthly, the through hole 10a or 30a of the ferrule 10 or 30 is made minute, and the external diameter of the bare optical fiber 20a is made smaller than the internal diameter of the through hole 10a or 30a. When the bare optical fiber 20a is to be inserted into the ferrule 10 or 30, this insertion has to be performed by observing the through hole of the ferrule 10 or 30 with an enlarging lens. Another drawback is that the insertion of the bare optical fiber is difficult unless the through hole of the ferrule 10 or 30 is tapered.

Therefore, another device for inserting the bare optical fiber into the through hole of the ferrule has been devised. In this device, a thin wire or thread is attached with an adhesive to the end portion of the bare optical fiber and is inserted into the through hole of the ferrule, and the wire or thread is extracted from the through hole of the ferrule. However, this method has a drawback that the adhesive is peeled off or sticks thicker than the external diameter of the bare optical fiber so that the bare optical fiber cannot be pulled out.

The present invention has been conceived to solve the drawbacks thus far described and has a first object to provide a resin coated optical fiber and a method of removing a coating from the resin coated optical fiber, in which the coating of the resin coated optical fiber can be removed over a length of 300 mm or more without damaging the outer surface of a bare optical fiber and in which, after the coating of the resin coated optical fiber was removed, there is no trouble that the waste of a coating resin is left on the surface of the bare optical fiber . A second object of the invention is to provide a process for producing an optical fiber part, which can prevent the bare optical fiber from being broken thereby to improve the working efficiency.

Disclosure of the Invention

In order to achieve these objects, according to a first mode of the invention, there is provided a resin coated optical fiber comprising: a bare optical fiber; and a primary coating layer and a secondary coating layer sequentially provided on the outer circumference of the bare optical fiber. The primary coating layer has a thickness of 60 to 200 μm, and a pulling force for simultaneously removing the primary coating layer and the secondary coating layer is 100 gf or less.

In the resin coated optical fiber of the first mode, according to a second mode of the invention, the primary coating layer has a tensile strength of 0.5 to 1 MPa and a swelling ratio of 5 to 150 % after immersed in a solvent, and the secondary coating layer has a thickness of 20 to 300 μm and a Young's modulus of 100 to 1,500 MPa.

In the resin coated optical fiber according to the first or second mode, according to a third mode of the invention, the primary coating layer and the secondary coating layer are made of a synthetic resin.

According to the resin coated optical fiber of the first to third modes of the invention, the coating of the resin coated optical fiber can be removed without lowering the strength of the bare optical fiber or other properties. After the coating of the resin coated optical fiber was removed, moreover, there is no trouble that the waste of the coating resin is left on the surface of the bare optical fiber.

According to a fourth mode of the invention, there is provided a method of removing a coating from a resin coated optical fiber, comprising: immersing the resin coated optical fiber over a length of at least 300 mm from its terminal in a solvent; and simultaneously removing the primary coating layer and the secondary coating layer after the primary coating layer was swelled.

According to the method of a fourth mode of the invention of removing the coating from the resin coated optical fiber, there is no trouble that the waste of the coating resin is left on the surface of the bare optical fiber after removing the coating from the resin coated optical fiber, so that the work to clean the bare optical fiber after the removal of the coating can be omitted unlike the method of the prior art for removing the coating of the resin coated optical fiber. Moreover, the outer surface of the bare optical fiber is not rubbed to eliminate the trouble that the strength or other properties of the bare optical fiber are deteriorated.

According to a firth mode of the invention, there is provided a process for producing an optical fiber part. When the bare optical fiber is to be inserted into a thin tube having an internal diameter equivalent to the external diameter of the bare optical fiber as set forth in any of first to third modes, the process comprises: connecting a leading fiber having a smaller diameter than the internal diameter of the thin tube, to the leading end portion of the bare optical fiber; and inserting and pulling the leading fiber into and out of the thin tube thereby to insert the bare optical fiber into the thin tube.

In the process for producing an optical fiber part of the fifth mode, according to a sixth mode of the invention, the thin tube is constructed to have a length two times or more of the length to be mounted in an optical part.

In the process for producing an optical fiber part of the fifth or sixth mode, according to a seventh mode of the invention, the thin tube having the bare optical fiber inserted thereinto is cut at a predetermined length.

In the process for producing an optical fiber part of the fifth mode, according to an eighth mode of the invention, the thin tube is composed of a plurality of short, thin tubes arranged in series with their through holes being axially aligned.

In the process for producing an optical fiber part of the eighth mode, according to a ninth mode of the invention, the bare optical fiber inserted into the short, thin tubes is cut to the length of the short, thin tubes.

In the process for producing an optical fiber part of any of the fifth to ninth modes, according to a tenth mode of the invention, the leading fiber is constructed of a quarts glass fiber, and a synthetic resin coating layer formed on the outer circumference of the quartz glass fiber.

In the process for producing an optical fiber part of any of the fifth to ninth modes, according to an eleventh mode of the invention, the leading fiber is constructed of a core, and a cladding and a synthetic resin coating layer sequentially provided on the outer circumference of the core.

In the process for producing an optical fiber part of the tenth or eleventh mode, according to a twelfth mode of the invention, the synthetic resin coating layer is made of an unreleasable synthetic resin.

In the process for producing an optical fiber part of any of tenth to twelfth modes, according to a thirteenth mode of the invention, the synthetic resin coating layer has a thickness of 5 μm or more.

In the process for producing an optical fiber part of any of the tenth to thirteenth modes, according to a fourteenth mode of the invention, the glass fiber or cladding for the leading fiber has an external diameter of 50 % or more of the internal diameter of the through hole of the thin tube, and the leading fiber including the unreleasable synthetic resin coating layer has an external diameter of 98 % or less of the same.

According to the process of the invention for producing the optical fiber part of the fifth to fourteenth modes of the invention, the external diameter of the leading fiber is made smaller than the internal diameter of the through hole of the thin tube. It is, therefore, possible to insert the leading fiber easily into the through hole of the thin tube and accordingly to insert the bare optical fiber connected to that leading fiber, easily and without any breakage into the through hole of the thin tube.

Brief Description of the Drawings

Fig. 1 is a transverse section showing one embodiment of a resin coated optical fiber of the invention.
Fig. 2 is an explanatory diagram showing the state, in which the pulling force of the resin coated optical fiber of the invention is measured.
Fig. 3 presents explanatory diagrams showing one embodiment of a process for producing an optical fiber part of the invention.
Fig. 4 is a transverse section of a leading optical fiber in the invention.
Fig. 5 is a transverse section of another leading optical fiber in the invention.
Fig. 6 presents explanatory diagrams of a process for producing an optical fiber part of the prior art.
Fig. 7 is an explanatory diagram of a process for producing another optical fiber part of the prior art.
Fig. 8 is an explanatory diagram of a process for producing another optical fiber part of the prior art.

Best Mode for Carrying out the Invention

Preferred embodiments, to which a resin coated optical fiber, a method of removing the coating of the resin coated optical fiber and a process for producing an optical fiber part according to the invention are applied, will be described with reference to the accompanying drawings.

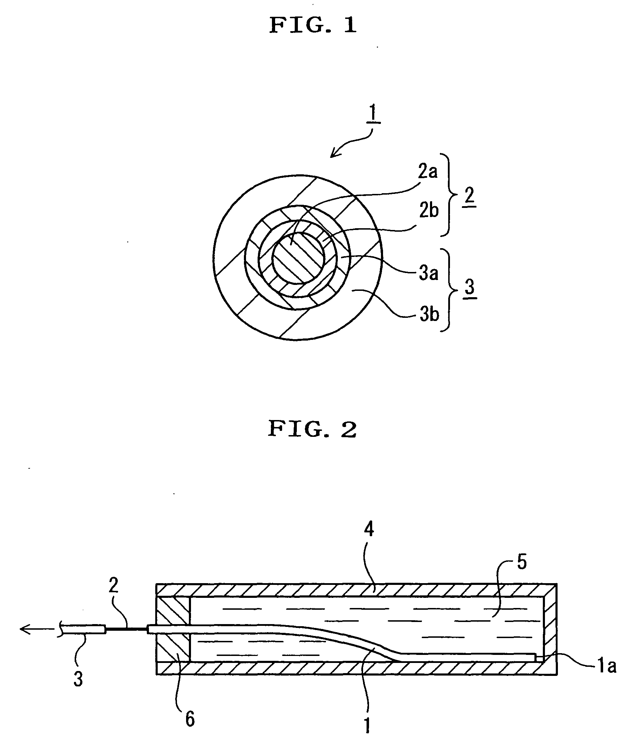

Fig. 1 is a transverse section of a resin coated optical fiber of the invention. In Fig. 1, a resin coated optical fiber 1 of the invention is provided with: a bare optical fiber 2 having a core 2a and a cladding 2b made mainly of quartz glass; and a primary coating layer 3a and a secondary coating layer 3b sequentially formed on the outer circumference of the bare optical fiber 2. Incidentally, the secondary coating layer 3b is provided, on its outer circumference, with a (not-shown) coating layer of a thermoplastic resin such as a nylon resin, if necessary.
Here, the primary coating layer 3a is desired to have a thickness of 60 to 200 μm. This reason is described in the following. If the thickness of the primary coating layer 3a is less than 60 μm, the adhesion of the primary coating layer 3a to the bare optical fiber 2 is more dominant than the breaking strength of the primary coating layer 3a. Before the primary coating layer 3a is released from the bare optical fiber 2, therefore, the primary coating layer 3a is broken by the force to remove the primary coating layer 3a. Still the worse, the waste of the coating resin is left on the surface of the bare optical fiber 2. If the thickness exceeds 200 μm, on the other hand, the shrinking force of the primary coating layer 3a is more dominant than the adhesion of the primary coating layer 3a to the bare optical fiber 2 so that the removing force of the primary coating layer 3a increases. Moreover, a separation is caused in the boundary between the bare optical fiber 2 and the primary coating layer 3a by the cooling and the relaxation after the production, and the strength of the bare optical fiber 2 may deteriorate.
Moreover, the primary coating layer 3a is desirably made of such a resin, e.g., an ultraviolet-curing urethane resin as will swell when it is immersed for a predetermined time (e. g. , about 30 min.) in an organic solvent such as a ketone solvent or an alcohol solvent. If the primary coating layer 3a is made of such resin, it swells when immersed in the solvent. Moreover, the solvent migrates into the boundary between the bare optical fiber 2 and the primary coating layer 3a to weaken the adhesion to the bare optical fiber 2 so that the force to remove the primary coating layer 3a can be made weaker than that before the immersion.
Next, the primary coating layer 3a after immersed in the solvent is desired to have a swelling ratio of 5 to 150 %. This reason is described in the following. If the swelling ratio of the primary coating layer 3a after immersed in the solvent is less than 5 %, the adhesion to the bare optical fiber 2 does not drop, but the primary coating layer 3a may be broken when it is removed. If the swelling ratio exceeds 150 %, on the other hand, the tensile strength of the primary coating layer 3a is lowered by the swell, and the primary coating layer 3a may be broken when it is removed. Here, the swelling ratio (i.e., the swelling ratio of the material in the sheet state) of the primary coating layer 3a can be determined from Formula 1.

[Formula 1]

$$(\text{Swelling Ratio}) = ((\text{Weight after Swell}) - (\text{Weight before Swell})) / (\text{Weight before Swell}) \times 100 [\%]$$

Moreover, the tensile strength of the primary coating layer 3a is desirably 0.5 to 1 MPa. This reason is described in the following. If the tensile strength of the primary coating layer 3a is less than 0.5 MPa, the primary coating layer 3a is easily cut by the shearing force while it is being removed. If the tensile strength exceeds 1 MPa, the hardness of the primary coating layer 3a does not drop even if it swells, so that a high pulling force is required for removing the primary coating layer 3a.

Next, the secondary coating layer 3b is desirably made of a resin having a Young's modulus of 100 to 1,500 MPa so that it may be removed in a cylindrical shape. This reason is described in the following. If the Young's modulus of the secondary coating layer 3b is less than 100 MPa, the side pressure on the primary coating layer 3a is weakened to deform the primary coating layer 3a thereby to cause a loss or damage easily on the bare optical fiber. If the Young's modulus exceeds 1,500 MPa, on the other hand, the force to swell is inhibited by the secondary coating layer 3b so that the force to remove the primary coating layer 3a rises.

Here, the tensile strength and the Young's modulus were measured in conformity with JIS K 7113-1995 by slicing the film sheets, which had been prepared by slicing film sheets cured with an ultraviolet ray of 0.35 J/cm2 from the material of the primary coating layer 3a and the secondary coating layer 3b, into test pieces having a thickness of $0.20 \pm 0.01$ mm and conforming to JIS K 7127-1999 (Test Piece Type 5). The testing rates of the tensile strength and the Young's modulus at testing were set to 50 mm/min. and 1 mm/min., respectively, and the strain for the Young's modulus was set to 2.5 %. Moreover, the STROGRPH M2 made by Toyo Seiki (Kabushiki Gaisha) was used as the tensile tester. The terminologies of "tensile breaking strength" and "tensile dividing elastic modulus" are used in the aforementioned JIS standards. In the invention, for the terminologies of the same meanings, the terminologies of "tensile breaking strength" in the JIS standards are used as the "tensile strength", and the terminologies of "tensile dividing elastic modulus" is used as the "Young's modulus".

Moreover, the coating thickness of the secondary coating layer 3b is desired within a range of 20 to 300 μm. This reason is described in the following. If the thickness of the secondary coating layer 3b is less than 20 μm, the gripping force of the secondary coating layer 3b propagates, when removed, to the primary coating layer 3a. As a result, the primary coating layer 3a having a soft property is flattened, and an excess frictional force is established at the time of removing the secondary coating layer 3b. If the thickness exceeds 300 μm, on the other hand, the primary coating layer 3a is tightly fastened by the combination of the Young's modulus and the shrinking force of the secondary coating layer 3b, and the adhesion of the primary coating layer 3a rises, whereby the primary coating layer 3a may be broken when the secondary coating layer is removed.

Next, we prepared the samples by preparing the primary coating layer 3a and the secondary coating layer 3b (as will be called together as the "coating 3") on the outer circumference of a quartz glass fiber having a cladding diameter of 125 μm under the conditions enumerated in Table 1, and examined the coating removabilities of the individual samples and the residence of the waste of the coating resin. In this embodiment, the ultraviolet-curing urethane resin is used as both the primary coating layer 3a and the secondary coating layer 3b.

[Table 1]

| Sample No. | SwellingRatio (%) of Primary Coating Layer | Young's Modulus (MPa) of Secondary Coating Layer | Thickness (μm) of Primary Coating Layer | Thickness (μm) of Secondary Coating Layer |
|---|---|---|---|---|
| 1 | 10 | 600 | 37.5 | 10 |
| 2 | 10 | 600 | 60 | 10 |
| 3 | 10 | 600 | 87.5 | 10 |
| 4 | 10 | 600 | 202.5 | 10 |
| 5 | 10 | 600 | 37.5 | 20 |
| 6 | 10 | 600 | 60 | 20 |
| 7 | 10 | 600 | 87.5 | 20 |
| 8 | 10 | 600 | 202.5 | 20 |
| 9 | 10 | 600 | 37.5 | 300 |
| 10 | 10 | 600 | 60 | 300 |
| 11 | 10 | 600 | 87.5 | 300 |
| 12 | 10 | 600 | 202.5 | 300 |
| 13 | 10 | 600 | 37.5 | 350 |
| 14 | 10 | 600 | 60 | 350 |

[Table 1]  (continued)

| Sample No. | SwellingRatio (%) of Primary Coating Layer | Young's Modulus (MPa) of Secondary Coating Layer | Thickness (µm) of Primary Coating Layer | Thickness (µm) of Secondary Coating Layer |
|---|---|---|---|---|
| 15 | 10 | 600 | 87.5 | 350 |
| 16 | 10 | 600 | 202.5 | 350 |

"Measurement of Pulling Force"

At first, the coating 3 was partially removed by cutting the coating 3 circumferentially at a position spaced by 300 mm from the end portion of each sample, thereby to expose the bare optical fiber 2 to the outside. A container 4 having an axial length of 500 mm was filled with a solvent 5 (25 °C (room temperature)) such as methyl ethyl ketone. Next, each sample was gripped liquid-tight by means of a coating gripping member 6 (e.g., a split silicon rubber member), and the terminal of the resin coated optical fiber 1 was immersed over a length of 300 mm from its end portion 1a in the solvent 5. After lapse of 30 mins, each sample was extracted from the container 4, and the outer surface of the coating 3 was gripped by a pair of (not-shown) flat members. In this state, the coating 3 was pulled and removed in the direction of arrow at a pulling speed of 500 mm/min. The (maximum) force to act was measured as the pulling force. Here, the STROGRPH M2 made by Toyo Seiki Kabushiki Kaisha was used as the tensile tester. A good mark (O) was put when the coating 3 was extracted in the cylindrical state, but otherwise a no good mark (X) was put.

In the measurement of the pulling force described above, the immersion length (i.e., the removal length of the coating) of the terminal of the resin coated optical fiber 1 immersed in the solvent was 300 mm. This is because an immersion length less than 300 mm reduces the working efficiency to insert the bare optical fiber 2 into a long ferrule drops.

"Measurement of Presence or Absence of Waste of Coating Resin"

Next, the outer surface of the bare optical fiber 2 cleared of the coating 3 was observed with a microscope. The no good mark (X) was put when the waste of the coating resin was left on the outer surface of the bare optical fiber 2, but otherwise the good mark (O) was put.

The measurement results are enumerated in Table 2.

[Table 2]

| Sample No. | State of Coating | Pulling Force (gf) | Presence of Waste of Coating Resin |
|---|---|---|---|
| 1 | X | (Core Deformation) | X |
| 2 | X | (Core Deformation) | X |
| 3 | X | (Core Deformation) | X |
| 4 | X | (Core Deformation) | X |
| 5 | X | 420 | X |
| 6 | O | 33 | O |
| 7 | O | 27 | O |
| 8 | X | 170 | O |
| 9 | X | 330 | X |
| 10 | O | 42 | O |
| 11 | O | 30 | O |
| 12 | X | 150 | O |
| 13 | X | 540 | X |
| 14 | O | 70 | X |
| 15 | O | 55 | X |

[Table 2]   (continued)

| Sample No. | State of Coating | Pulling Force (gf) | Presence of Waste of Coating Resin |
|---|---|---|---|
| 16 | X | 150 | X |

From Table 2, it is understood that the pulling force acts as an important factor to determine whether or not the waste of the coating resin is left on the outer surface of the bare optical fiber 2 after cleared of the coating. It is understood from Sample Nos. 6, 7, 10 and 11 that the coating 3 can be pulled in the cylindrical state if the pulling force is 100 gf or lower, and that no waste of the coating resin is left on the outer surface of the bare optical fiber 2 after cleared of the coating 3.

Next, samples were prepared by replacing the forming conditions of the primary coating layer and the secondary coating layer, as numerated in Table 1, by those enumerated in Table 3, and examinations were made on the coating removabilities of the individual samples and the residence of the waste of the coating resin.

[Table 3]

| Sample No. | Swelling Ratio (%) of Primary Coating Layer | Young's Modulus (MPa) of Secondary Coating Layer | Thickness (μm) of primary Coating Layer | Thickness (μm) of Secondary Coating Layer |
|---|---|---|---|---|
| 17 | 2 | 10 | 90 | 100 |
| 18 | 2 | 100 | 90 | 100 |
| 19 | 2 | 1500 | 90 | 100 |
| 20 | 2 | 1900 | 90 | 100 |
| 21 | 5 | 10 | 90 | 100 |
| 22 | 5 | 100 | 90 | 100 |
| 23 | 5 | 1500 | 90 | 100 |
| 24 | 5 | 1900 | 90 | 100 |
| 25 | 150 | 10 | 90 | 100 |
| 26 | 150 | 100 | 90 | 100 |
| 27 | 150 | 1500 | 90 | 100 |
| 28 | 150 | 1900 | 90 | 100 |
| 29 | 175 | 10 | 90 | 100 |
| 30 | 175 | 100 | 90 | 100 |
| 31 | 175 | 1500 | 90 | 100 |
| 32 | 175 | 1900 | 90 | 100 |

As understood from Table 3, in the case of a swelling ratio of 175 %, this excessive swell releases the primary coating layer off the bare optical fiber 2 before the next step thereby to deteriorate the workability. In the case of a swelling ratio of 2 %, on the other hand, the swell was lacked and the adhesion of the primary coating layer to the bare optical fiber 2 did not drop so that the coating 3 kept the cylindrical state and could not be pulled out.

Table 4 enumerates the measurement results, which were obtained like before by measuring the pulling force and the presence of the coating resin.

[Table 4]

| Sample No. | State of Coating | Pulling Force (gf) | Presence of Waste of Coating Resin |
|---|---|---|---|
| 17 | X | 840 | X |
| 18 | X | 550 | X |
| 19 | X | 670 | X |

[Table 4]   (continued)

| Sample No. | State of Coating | Pulling Force (gf) | Presence of Waste of Coating Resin |
|---|---|---|---|
| 20 | X | 700 | X |
| 21 | X | 250 | X |
| 22 | O | 70 | O |
| 23 | O | 80 | O |
| 24 | X | 500 | X |
| 25 | X | 360 | X |
| 26 | O | 24 | O |
| 27 | O | 45 | O |
| 28 | X | 150 | X |
| 29 | O | 88 | X |
| 30 | O | 60 | X |
| 31 | O | 75 | X |
| 32 | O | 92 | X |

As understood from Table 4, any of the samples (of Nos. 22, 23, 26 and 27) within the range of the invention could be cleared of the coating 3 in the cylindrical state, and no waste of the coating resin was left on the surface of the bare optical fiber 2.

In the aforementioned embodiment, the ultraviolet-curing urethane resin is used as the coating material for the primary coating layer and the secondary coating layer. However, the invention should not be limited to such material within its range.

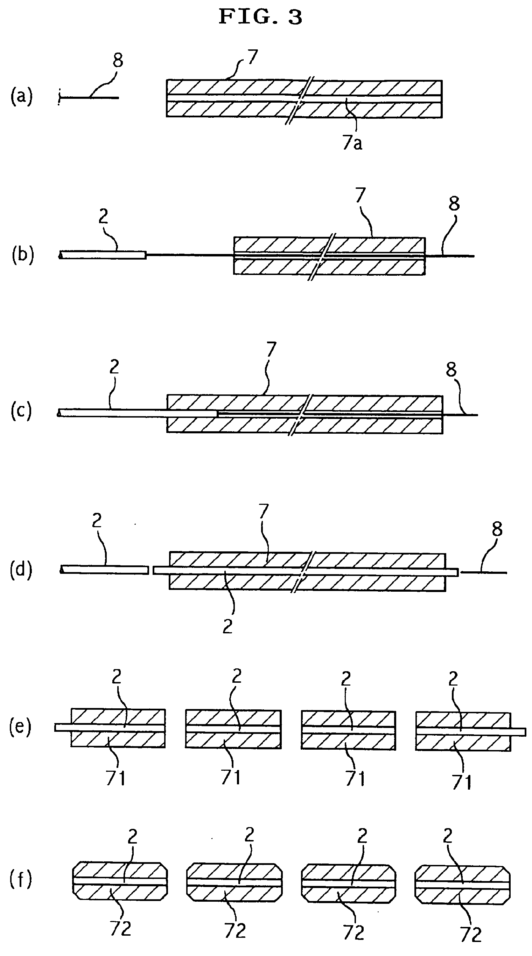

With reference to Fig. 3 to Fig. 5, here will be described a preferred embodiment, to which a process for producing an optical fiber part of the invention is applied. Here, Fig. 3 presents explanatory diagrams showing a procedure for assembling the optical fiber part of the invention. In Fig. 3, the portions common to those of Fig. 1 and Fig. 2 are omitted in description by designating them by the common reference numerals.

In Fig. 3 (a), numeral 7 designates a long, thin tube made of crystal glass. This thin tube 7 has a through hole 7a filled throughout its length with a (not-shown) liquid adhesive. Here, the thin tube 7 has an axial length of about 100 to 300 mm, and the through hole 7a of the thin tube 7 has an internal diameter of 126 μm. Moreover, the coating 3 (of Fig. 1) constructing the resin coated optical fiber 1 (of Fig. 1) is removed according to the length of the thin tube 7 so that the bare optical fiber 2 (of Fig. 1) having an external diameter of 125 μm is exposed to the outside.

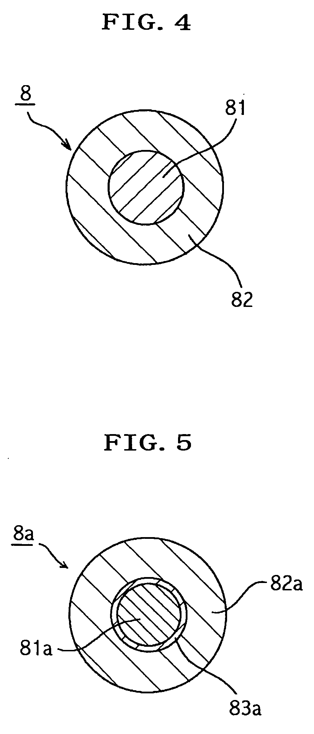

Next, the leading end portion of a leading fiber 8, which is made radially smaller than the internal diameter of the through hole 7a of the thin tube 7, is inserted into one end side of the thin tube 7 and extracted from the other end side of the thin tube 7. The leading fiber 8 will be described in detail with reference to Fig. 4 and Fig. 5.

Then, the trailing end portion of the leading fiber 8 and the end portion of the bare optical fiber 2 are fused and connected to each other, as shown in Fig. 3(c). After this, the leading end portion of the leading fiber 8 is pulled so far that the bare optical fiber 2 is positioned in the through hole 7a of the thin tube 7.

In case the leading end portion of the leading fiber 8 is to be pulled, it is desired to grip the resin coated optical fiber 1 (as referred to Fig. 1). This is partly because the bare optical fiber 2 may be broken, if gripped, at its gripped portion and partly because the waste of the bare optical fiber 2 , which is attached to the grippedportion, may enter the through hole 7a of the thin tube 7 thereby to lower the characteristics of the bare optical fiber 2.

Next, the bare optical fiber 2 is inserted into the through hole 7a of the thin tube 7, as shown in Fig. 3(d). After this, the bare optical fiber 2 is cut at its portions protruding from the two ends of the thin tube 7, and the adhesive is heated and set (at 100 °C for about 30 to 60 mins.) to fix the bare optical fiber 2 in the through hole 7a of the thin tube 7.

The thin tube 7 having the bare optical fiber 2 inserted therein is cut to a predetermined length (e.g., to about 16.7 mm in the case of an MU type fixed attenuator) in accordance with the length of the connector, as shown in Fig. 3 (e). Next, thin tubes 71 cut to the length of the connector are chamfered and polished at their two end portions. As a result an optical fiber part 72 is completed, as shown in Fig. 3(f).

Here, it is desired that the axial length of the thin tube 7 is two times or more of that of the optical fiber part such as the connector. This reason is described in the following. The thin tube 7 such as the ferrule is cut to the length of the optical fiber part, in which the thin tube 7 is mounted. If the length of the thin tube 7 is less than two times of the

**EP 1 562 060 A1**

length of the optical fiber part, the thin tube 7 can be applied to only one optical fiber part so that the working efficiency of the production of the optical fiber part is not improved.

According to the process thus far described for producing the optical fiber part, the bare optical fiber 2 can be inserted by the single work into the through hole 7a of the long, thin tube 7 so that the working efficiency can be improved. Even unless the inlet hole of the thin tube 7 is tapered, moreover, the bare optical fiber 2 can be easily inserted to omit the tapering step.

The foregoing embodiment has described the case, in which the through hole 7a is filled in advance with the adhesive. However, this adhesive may also be applied to the outer circumference of the bare optical fiber 2 when this bare optical fiber 2 is inserted into the through hole 7a. Moreover, the insertion of the bare optical fiber 2 into the through hole 7a should not be limited to that into the long thin tube. For example, the bare optical fiber may also be inserted into a short, thin tube having a length equal to that of an optical fiber part such as an attenuation fiber. Alternatively, a plurality of short, thin tubes are arranged in series with their through holes being axially aligned, as shown in Fig. 7, and the bare optical fiber may be inserted all at once into the through holes of those thin tubes through the leading fiber. In this case, the plural short, thin tubes are desirably arranged in a V-shaped groove of a bed.

Fig. 4 is a transverse section of a leading fiber to be connected to the end portion of the bare optical fiber 2, and Fig. 5 is a transverse section of a leading fiber in another embodiment.

In Fig. 4, the leading fiber 8 is provided with a glass fiber 81 of quartz and a coating layer 82 of an unreleasable synthetic resin formed on the outer circumference of the glass fiber 81. The external diameter of the coating layer 82, i.e., the external diameter of the leading fiber 8 is made smaller than the internal diameter of the through hole 7a of the thin tube 7. Here, the external diameters of the glass fiber 81 and the coating layer 82 of the synthetic resin are set at 100 μm and 120 μm, respectively.

Next, the leading fiber in another embodiment is provided, as shown in Fig. 5, with a core 81a made mainly of quartz glass, a cladding 83a made mainly of quartz glass and formed on the outer circumference of the core 81a, and a coating layer 82a made of an unreleasable synthetic resin and formed on the outer circumference of the cladding 83a. Here, the core 81a, the cladding 83a and the coating layer 82a of the synthetic resin are made to have external diameters of 10 μm, 100 μm and 120 μm, respectively.

The leading fiber 8 or 8a thus constructed is provided with the core 81 or the cladding 83a made mainly of quartz glass so that the core 81 or the cladding 83a and the bare optical fiber 2 can be connected to each other. Specifically, the leading fiber 8 or 8a and the bare optical fiber 2 to be inserted are set in an external diameter centering type fusing connector so that they can be fused and connected to each other by melting the two glasses with a discharge. Especially in the embodiment shown in Fig. 5, it is possible to use a core direct vision type fusing connector having a higher centering precision and accordingly to reduce the connection fault in the connected portion between the leading fiber 8a and the bare optical fiber 2, that is, the ununiformity of the connection areas of the two, the mislocation and misalignment of the connected portions.

Here will be described the thicknesses of the coating layer 82 or 82a of the leading fiber 8 or 8a, the relations between the external diameter of the glass fiber 81 (or the cladding 83a) and the internal diameter of the thin tube 7, and the reasons for providing the coating layer 82 or 82a on the outer circumference of the glass fiber 81 (or the cladding 83a).

At first, it is desired that the coating layer 82 or 82a made of the synthetic resin has a thickness of 5 μm or more. This reason is described in the following. If the synthetic resin coating layer 82 or 82a is made to have a thickness less than 5 μm, it is so thin that it easily becomes so eccentric that the glass fiber 81 (or the cladding 83a) is easily exposed or damaged.

Secondly, it is desired that the external diameter of the glass fiber 81 (or the cladding 83a) is 50 % or more of the internal diameter of the through hole 7a of the thin tube 7, and that the external diameter of the leading fiber 8 or 8a containing the synthetic resin coating layer 82 or 82a is 98 % or less of the internal diameter of the through hole 7a of the thin tube 7. In other words, it is preferred that the external diameter of the leading fiber 8 or 8a is within a range of 50 to 98 % of the internal diameter of the through hole 7a of the thin tube 7. This reason is described in the following. If the external diameter is less than 50 %, the leading fiber 8 or 8a becomes less rigid and bent in the through hole 7a so that it can hardly be inserted into the through hole 7a. If the external diameter exceeds 98 %, the clearance between the through hole 7a and the leading fiber 8 or 8a becomes small, and the frictional resistance between the outer circumference of the leading fiber 8 or 8a and the inner circumference wall of the through hole 7a becomes so high as to make it difficult to insert the leading fiber 8 or 8a into the through hole 7a.

Thirdly, the reason why the synthetic resin coating layer 82 or 82 is provided on the outer circumference of the glass fiber 81 (or the cladding 83a) is to protect the outer surface of the glass fiber 81 (or the cladding 83a) and to prevent the leading fiber 8 or 8a from being broken when the leading fiber 8 or 8a is inserted into the thin tube 7.

Fourthly, the synthetic resin coating layer 82 or 82a is desirably made of such an unreleasable resin, e.g., an ultraviolet-curing urethane resin or an ultraviolet-curing epoxy resin as highly adheres of itself to the glass fiber 81 (or the cladding 83a) so that it cannot be released unless it is mechanically cut or immersed in chemicals such as strong acid or strong alkali.

From the discussion described above, it is desired that the leading fiber 8 or 8a has an external diameter of 73 to 123.5 μm in case the internal diameter of the through hole 7a of the thin tube 7 is 126 μm. However, this embodiment is described on the case of the leading fiber 8 or 8a having an external diameter of 120 μm. These dimensional values are presented exclusively for the description, and it goes without saying that the invention should not be limited to those values. Moreover, the dimensional values used in the description of the embodiments of Fig. 1 and so on are also presented for the description, and the invention should not be limited to those values.

Here, the foregoing embodiments have been described on the case, in which the crystal glass is employed as the thin tube. However, the invention should not be limited thereto but can employ zirconia, a metal, plastics and quartz. Moreover, the thin tube should not be limited to the arrangement of the MU type optical function part but may also be arranged in the FC, ST, SC or LC type connector, for example. Still moreover, the bare optical fiber to be inserted into the thin tube should not be the optical attenuation fiber but can also employ a fiber grating to be used in the optical filter, or a quartz bare optical fiber such as a core-diameter changed fiber or a bare optical fiber having a condensing lens function.

Industrial Applicability

At first, according to the resin coated optical fiber of the invention, the coating of the resin coated optical fiber can be removed without lowering the strength of the bare optical fiber or other properties. After the coating of the resin coated optical fiber was removed, moreover, there is no trouble that the waste of the coating resin is left on the surface of the bare optical fiber.

Secondly, according to the method of the invention of removing the coating from the resin coated optical fiber, there is no trouble that the waste of the coating resin is left on the surface of the bare optical fiber after the resin coated optical fiber was cleared of the coating, so that the work to clean the bare optical fiber after the removal of the coating can be omitted. Moreover, the outer surface of the bare optical fiber is not rubbed to eliminate the trouble that the strength or other properties of the bare optical fiber are deteriorated.

Thirdly, according to the process of the invention for producing the optical fiber part, the external diameter of the leading fiber is made smaller than the internal diameter of the through hole of the thin tube. It is, therefore, possible to insert the leading fiber easily into the through hole of the thin tube and accordingly to insert the bare optical fiber connected to that leading fiber, easily and without any breakage into the through hole of the thin tube. In case the long bare optical fiber is inserted into either the plural thin tubes of a unit length arranged in series or a long thin tube, on the other hand, it is possible to reduce the working step and to raise the working efficiency. Moreover, the leading fiber is made of the core and the cladding, it is possible to fuse and connect the leading fiber and the bare optical fiber by the discharge and accordingly to reduce the connection failure (e.g., the ununiformity in the connection area, or the mislocation or misalignment of the connected portion) in the connected portion between the leading fiber and the bare optical fiber.

**Claims**

1. A resin coated optical fiber comprising a bare optical fiber, and a primary coating layer and a secondary coating layer sequentially provided on the outer circumference of said bare optical fiber, **characterized in that**:

   said primary coating layer has a thickness of 60 to 200 μm, and
   a pulling force for simultaneously removing said primary coating layer and said secondary coating layer is 100 gf or less.

2. A resin coated optical fiber as set forth in claim 1, **characterized in that**:

   said primary coating layer has a tensile strength of 0.5 to 1 MPa and a swelling ratio of 5 to 150 % after immersed in a solvent, and
   said secondary coating layer has a thickness of 20 to 300 μm and a Young's modulus of 100 to 1,500 MPa.

3. A resin coated optical fiber as set forth in claim 1 or 2, **characterized in that**:

   said primary coating layer and said secondary coating layer are made of a synthetic resin.

4. A method of removing a coating from a resin coated optical fiber, **characterized by**:

immersing the resin coated optical fiber as set forth in any one of claims 1 to 3 over a length of at least 300 mm from its terminal in a solvent, and
simultaneously removing said primary coating layer and said secondary coating layer after said primary coating layer was swelled.

5. A process for producing an optical fiber part, **characterized by** comprising, when said bare optical fiber is to be inserted into a thin tube having an internal diameter equivalent to the external diameter of the bare optical fiber as set forth in any one of claims 1 to 3:

connecting a leading fiber having a smaller diameter than the internal diameter of said thin tube, to the leading end portion of said bare optical fiber, and
inserting and pulling said leading fiber into and out of said thin tube thereby to insert said bare optical fiber into said thin tube.

6. A process for producing an optical fiber part as set forth in claim 5, **characterized in that**:

said thin tube is constructed to have a length two times or more of the length to be mounted in an optical part.

7. A process for producing an optical fiber part as set forth in claim 5 or 6, **characterized in that**:

said thin tube having said bare optical fiber inserted thereinto is cut at a predetermined length.

8. A process for producing an optical fiber part as set forth in claim 5, **characterized in that**:

said thin tube is composed of a plurality of short, thin tubes arranged in series with their through holes being axially aligned.

9. A process for producing an optical fiber part as set forth in claim 8, **characterized in that**:

the bare optical fiber inserted into said short, thin tubes is cut to the length of said short, thin tubes.

10. A process for producing an optical fiber part as set forth in any one of claims 5 to 9, **characterized in that**:

said leading fiber is constructed of a quarts glass fiber, and
a synthetic resin coating layer formed on the outer circumference of said quartz glass fiber.

11. A process for producing an optical fiber part as set forth in any one of claims 5 to 9, **characterized in that**:

said leading fiber is constructed of a core, and
a cladding and a synthetic resin coating layer sequentially provided on the outer circumference of said core.

12. A process for producing an optical fiber part as set forth in claim 10 or 11, **characterized in that**:

said synthetic resin coating layer is made of a synthetic resin having a high adhesion to said bare optical fiber.

13. A process for producing an optical fiber part as set forth in any one of claims 10 to 12, **characterized in that**:

said synthetic resin coating layer has a thickness of 5 $\mu$m or more.

14. A process for producing an optical fiber part as set forth in any one of claims 10 to 13, **characterized in that**:

the glass fiber or cladding for said leading fiber has an external diameter of 50 % or more of the internal diameter of the through hole of said thin tube, and
said leading fiber has an external diameter of 98 % or less of the internal diameter of the through hole of said thin tube.

## FIG. 1

## FIG. 2

# FIG. 3

FIG. 4

FIG. 5

# FIG. 6

(a)

(b)

(c)

# FIG. 7

FIG. 8

## INTERNATIONAL SEARCH REPORT

| International application No. |
|---|
| PCT/JP03/10572 |

| A. CLASSIFICATION OF SUBJECT MATTER |
|---|
| Int.Cl⁷ G02B6/44, G02B6/00, G02B6/36 |

According to International Patent Classification (IPC) or to both national classification and IPC

| B. FIELDS SEARCHED |
|---|
| Minimum documentation searched (classification system followed by classification symbols)<br>Int.Cl⁷ G02B6/44, G02B6/00, G02B6/36 |

Documentation searched other than minimum documentation to the extent that such documents are included in the fields searched

| Jitsuyo Shinan Koho | 1922–1996 | Toroku Jitsuyo Shinan Koho | 1994–2003 |
|---|---|---|---|
| Kokai Jitsuyo Shinan Koho | 1971–2003 | Jitsuyo Shinan Toroku Koho | 1996–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 62-99711 A (Sumitomo Electric Industries, Ltd.),<br>09 May, 1987 (09.05.87),<br>Page 2, lower right column, lines 6 to 20; Fig. 1<br>(Family: none) | 1–14 |
| A | JP 11-202174 A (Fujikura Ltd.),<br>30 July, 1999 (30.07.99),<br>Par. Nos. [0010] to [0013]; table 1<br>(Family: none) | 1–2 |
| A | JP 4-22242 B2 (Ube-Nitto Kasei Co., Ltd.),<br>16 April, 1992 (16.04.92),<br>Page 1, right column, line 22 to page 2, left column, line 9; page 2, right column, lines 19 to 35; table 1<br>(Family: none) | 2 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>11 September, 2003 (11.09.03) | Date of mailing of the international search report<br>30 September, 2003 (30.09.03) |
|---|---|
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

| International application No. |
| --- |
| PCT/JP03/10572 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 58-28703 A   (Nippon Telegraph & Telephone Public Corp.), 19 February, 1983 (19.02.83), All pages; all drawings (Family: none) | 4 |
| Y A | US 2002/0039472 A1   (TAKEUCHI), 04 April, 2002 (04.04.02), All pages; all drawings & JP 2002-116324 A All pages; all drawings & CN 1336560 A | 5-7 10-14 |
| Y A | JP 2002-182066 A   (Nippon Telegraph And Telephone Corp.), 26 June, 2002 (26.06.02), All pages; all drawings (Family: none) | 5-7 10-14 |
| Y A | JP 2001-51158 A   (Totoku Electric Co., Ltd.), 23 February, 2001 (23.02.01), Claim 3; Fig. 2 (Family: none) | 5,8-9 10-14 |
| A | JP 2000-39543 A   (Fujikura Ltd.), 08 February, 2000 (08.02.00), Par. No. [0003] (Family: none) | 5-14 |

Form PCT/ISA/210 (continuation of second sheet) (July 1998)